**Europäisches Patentamt**

(19) **European Patent Office**

**Office européen des brevets**

(11) Publication number : **0 341 797 B1**

## (12) EUROPEAN PATENT SPECIFICATION

(45) Date of publication of patent specification :
30.09.92 Bulletin 92/40

(51) Int. Cl.⁵ : **B29C 33/38, B29C 33/56**

(21) Application number : **89201174.3**

(22) Date of filing : **09.05.89**

(54) **Mould and process for the fabrication thereof.**

(30) Priority : **11.05.88 NL 8801241**

(43) Date of publication of application :
**15.11.89 Bulletin 89/46**

(45) Publication of the grant of the patent :
**30.09.92 Bulletin 92/40**

(84) Designated Contracting States :
**AT BE CH DE ES FR GB GR IT LI NL SE**

(56) References cited :
EP-A- 0 052 380
EP-A- 0 227 201
WO-A-83/03792
GB-A- 1 287 513
GB-A- 2 105 251
US-A- 2 333 679
US-A- 3 161 919

(56) References cited :
US-A- 4 482 385
PATENT ABSTRACTS OF JAPAN, vol. 6, no.
249 (M-177)[1127], 8th December 1982, page
126 M 177 ; & JP-A-57 146 613 (SEKI-
SUIKAGAKU KOGYO K.K.) 10-09-1982
JAPAN PLASTICS AGE, vol. 24, no. 207,
January/February 1986, pages 35-43, Tokyo,
JP ; T. TSUYUSAKI : "Simple molds for plas-
ticsprocessing"
JAPAN PLASTICS AGE, vol. 23, no. 204,
July/August 1985, pages 33-38, Tokyo, JP ; T.
TSUYUSAKI : "Simple molds for plas-
ticsprocessing"

(73) Proprietor : **DSM N.V.**
**Het Overloon 1**
**NL-6411 TE Heerlen (NL)**

(72) Inventor : **Van Dalen, Hendrik**
**Elisabethstraat 24**
**NL-6161 GT Geleen (NL)**

## Description

The invention relates to a mould for the preparation of shaped objects, which mould possesses a body fabricated predominantly from a composition comprising cement and metal particles.

Such a mould is known from US patent specification 4 482 385. The composition of the mould body described therein comprises Portland cement and irregularly shaped particles of stainless steel. The object of this composition is to achieve high strength, low porosity and thermal properties rendering the composition suitable for the fabrication of moulds for vacuum forming. A drawback of this mould is that the inner side of the mould, i.e. the side where the mould face is, comes into direct contact with the material to be moulded. Many of these materials attack the cement component of the mould body, so that the mould face is roughened, which adversely affects the appearance of the objects formed. Another drawback is that the stainless steel particles lie at the surface of the mould face. After a number of temperature changes, with dissimilar expansion and shrinkage of the cement component and the steel component, openings are formed between these two components, which also leads to increased roughness of the mould face. Yet another drawback is that drying of the cement body results in crackle, i.e. a network of fine cracks, in the surface, and thus also in the mould face, and these cracks are visible in the products formed.

From European patent specification 0 052 380 another mould is known, whose body comprises a cement component and optionally iron particles. This mould has the same drawbacks as indicated in the above.

GB-A-1 287 513 shows a mould having a surface coated with a thermoplastic layer. The preamble of Claim 1 is based upon this.

The invention aims to provide a mould that eliminates said drawbacks and in which the mould face can simply be provided with a metal layer.

This is achieved in that the mould face of the mould has a coating which comprises at least a layer of thermosetting plastic bordering on the mould body and in that on the interface a bonding agent is present that consists of a single layer of closely adjacent metal particles, which metal particles are partially embedded in the layer of thermosetting plastic and are bonded to it at least by chemical bonds, the metal particle surfaces that are not in contact with the resin being entirely surrounded by cement, yielding at least a mechanical anchorage in the mould body.

A mould designed according to the invention can be used for moulding of materials that, without the layer of thermosetting plastic, would attack the cement component. Any fillers that are incorporated in the mould body, such as metal particles, are shielded from the mould face by the layer of thermosetting plastic. The presence of the bonding agent forms an essential part of the mould to render it suitable for plastics processing techniques in which the mould is subjected to a rapid succession of large temperature and/or pressure changes, such as occurring in injection moulding and compression moulding, for instance in reaction injection moulding (RIM) of polyamides and polyurethanes and compression moulding of polyester moulding compounds (SMC).

The natural bonding forces between cement, metal and the layer of thermosetting plastic are utilized over a larger surface area, while the mechanical anchorages, especially in the mould body, contribute substantially to the total bonding effect of the bonding system. The adhesive as described is active against forces acting both perpendicularly to and tangentially to the mould face, which would otherwise cause the layer of thermosetting plastic to loosen from the mould body.

As thermosetting plastic use may be made of epoxy or polyester resins.

Preferably the metal particles consist of iron and have an irregular surface.

Some degree of rust formation on the iron surface may promote natural bonding of the iron to the cement component and the irregular surface promotes mechanical anchorage between the particles and the materials surrounding them. The surface irregularity moreover enlarges the total bonding surface and further plays an advantageous part in the supply or discharge of heat.

The iron particles in the bonding system may have a maximum size of 5 mm and are of a compact form, the ratio between largest and smallest size preferably being between 1 and 3.

It may be advantageous that the mould face proper is provided with a metal layer if extremely high demands are to be met as regards the smoothness of the object to be formed or if materials are to be processed that may attack not only cement but also the resin, such as plastics containing styrene groups. An advantage of the mould according to the invention is evident also here because the problem of bonding of a metal layer to the mould body is eliminated by the presence of the resin layer. The bond between the resin layer and the metal is amply sufficient for the application in moulds. Bonding of metal to the cement-containing basic mass yields much greater problems.

The thickness of the metal layer exceeds 0.25 mm, values between 0.5 and 3 mm being suitable.

The mould with and without metal layer can be used many times at maximum temperatures between 200 and 300 C and fluctuating surface pressures up to more than 1000 bar, without the thermosetting plastic layer coming loose from the cement body and while yielding products having a smooth surface.

The invention also relates to a process for fabrication of a mould consisting of two halves as are customary for injection moulding or compression moulding of objects.

This process comprises the following steps:

a) placing a contour model on a solid base;

b) application of a layer of uncured thermosetting plastic to the surface of the contour model;

c) application of a layer of irregularly shaped, adjacent metal particles such that each metal particle is partially embedded in the still soft plastic layer;

d) curing of the plastic layer;

e) removal of air from the cavities in the layer of metal particles projecting from the plastic layer, these cavities being filled with cement paste;

f) pouring cement paste into a shell mould placed around the contour model until it is full;

g) sprinkling the cement paste with metal particles such that, through sagging of the metal particles in the cement paste, a packing is formed of adjacent metal particles;

h) curing of the cement paste;

i) using cement paste to cast a level back face and allowing this to cure;

j) turning the mould part 180 and removing the contour model;

k) applying the material that realizes the mould cavity for the object to be formed; (now the contour model for the second mould half has been obtained);

l) repeating steps b through j to fabricate the second mould half.

If a metal layer is desired on the plastic layer, an intermediate step can be inserted between step a) and step b), in which the contour model is first provided with a metal layer.

Application of a metal layer is preferably effected by flame spraying. The irregular surface on the non-mould face side of the metal layer, as formed upon flame spraying, raises the bonding surface with the plastic layer to be applied later.

Application of the metal layers according to step c) can be effected by filling up a ring, placed around the contour model, with metal particles and removing the loose metal particles after curing of the plastic layer.

A suitable manner to remove the air from the cavities in the metal particles projecting from the epoxy resin layer is by spraying cement paste against the rough surface formed by the metal particles projecting from the epoxy resin layer.

Around the mould parts steel clamping rings may be provided to absorb the lateral pressure during compression or injection moulding. This may also be done by means of tie rods provided in the mould parts perpendicular to the direction of closure.

Below the invention will be elucidated on the basis of an embodiment as shown in the drawing.

Figure 1 is a schematic section of the mould according to the invention, and

Figure 2 presents a detail of the anchorage of the plastic layer in the surrounding cement.

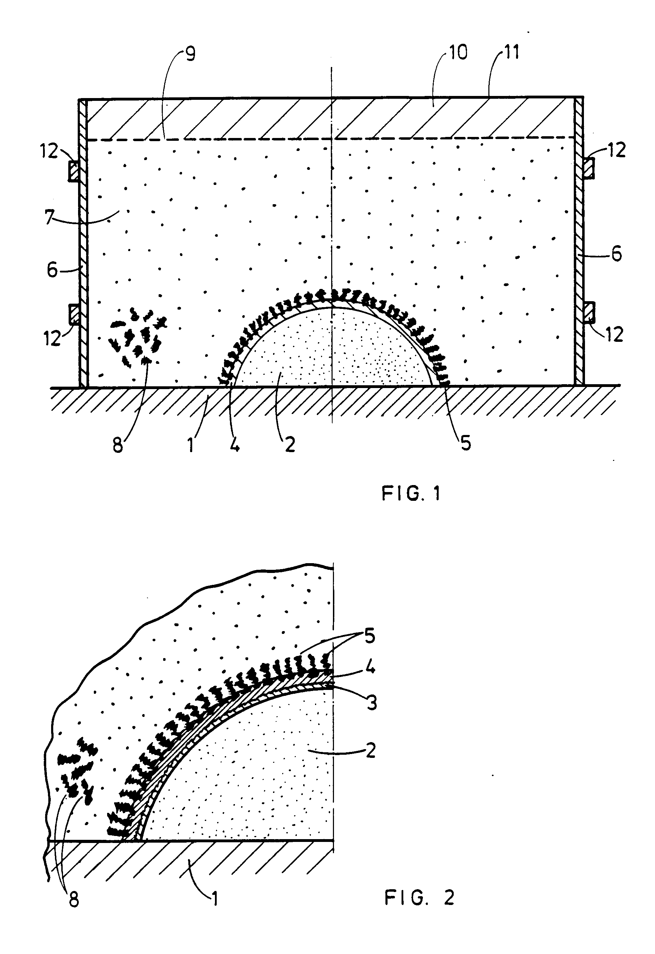

As can be seen in Fig. 1, a contour model 2 is placed on a level base 1. This contour model may for instance be made of gypsum, wood or a different material. If desired, a metal layer 3 (see Fig. 2) is applied to contour model 2. This can be effected by flame spraying of a zinc alloy, for instance MCP 400 of Hek. The side of metal layer 3 that faces contour model 2 is smooth, while the opposite side is somewhat rough. To this rough side of metal layer 3 a plastic layer 4 is applied, for instance of epoxy resin, with good bonding to metal layer 3. While still soft, epoxy resin layer 4 is sprinkled with metal particles 5, which partly penetrate the epoxy resin layer. As the figures show, the metal particles 5 are of an irregular shape, promoting anchorage in the layers. After curing of the epoxy resin the metal particles 5 partly project out of the epoxy resin layer. To remove air from the cavities via the metal particles projecting from epoxy resin layer 4, cement paste is sprayed against the rough surface formed by the metal particles 5 projecting from epoxy resin layer 4. Cement paste is obtained by mixing approximately 3 parts by weight of cement with approximately 1 part by weight of water and approximately 0.006 part by weight of a softening agent.

Subsequently, shell mould 6 around contour model 2 is filled, by spraying, with cement paste 7. Then the cement paste is sprinkled with metal particles 8 (partly shown). The metal particles 8 sag in the cement paste, forming a packing of adjacent metal particles. The cement paste is then allowed to cure. Shell mould 6 is now filled up to line 9. The remaining space of the shell is filled with cement paste 10 so that, after curing thereof, a smooth back face 11 of the mould is obtained In the mould, heat supply and discharge channels may be provided. These channels are not shown in the drawing.

The shell mould can be reinforced by, for instance, steel clamps 12. By way of reinforcement also tie rods (not shown) may be provided in the mould.

Now one mould half is completed. It is turned 180 and the contour model is removed.

For fabrication of the second mould half (male mould), first a wax layer is provided in the mould cavity of the first, completed mould half. The thickness of this wax layer equals that of the object to be formed. Now the contour model for the second mould half is ready.

Subsequently the procedure for fabricating the second mould half is repeated.

The metal layers of the mould faces may, if desired, be polished.

The epoxy resin may contain aluminium powder. This facilitates processing.

With the method as described, moulds for injection moulding, compression moulding and blow moulding can be fabricated in a substantially shorter time than when these mould were to be fabricated entirely from steel. They are considerably cheaper than steel moulds and therefore they are commercially attractive also for smaller series of plastic products. This also holds for prototypes of the objects to be made. Owing to the metal particles 5 a very good bond is obtained between plastic layer 4 and the surrounding cement, so that this plastic layer does not come loose from the mould body, especially in injection moulding and compression moulding, during which high pressures and temperature changes may occur.

## Claims

1. Mould for the preparation of shaped objects, which mould possesses a body that is fabricated substantially from a composition comprising cement, where the mould face of the mould has a coating which comprises at least a layer of thermosetting plastic bordering on the mould body and characterized in that on the interface a bonding agent is present that consists of a single layer of closely adjacent metal particles, which metal particles are partially embedded in the layer of thermosetting plastic and are bonded to it at least by chemical bonds, the metal particle surfaces that are not in contact with the resin being entirely surrounded by cement, yielding at least a mechanical anchorage in the mould body.

2. Mould according to claim 1, characterized in that the thermosetting plastic is an epoxy resin or polyester resin.

3. Mould according to either of claims 1 and 2, characterized in that the metal particles have an irregular surface and are of a compact form, such that substantially all of them have a ratio between largest and smallest dimension of between 1 and 3.

4. Mould according to any one of claims 1-3, characterized in that the plastic layer is provided with a metal having a thickness in excess of 0.25 mm, by preference between 0.5 and 3 mm.

5. Mould according to any one of claims 1-4, characterized in that the plastic layer contains aluminium powder.

6. Mould according to any one of claims 1-5, characterized in that the metal particle packing is a composition consisting of compact metal particles, substantially with a ratio between largest and smallest dimension of between 1 and 2, and of fibre-shaped metal particles, substantially with a ratio between smallest and largest dimension of between 2 and 10.

7. Process for fabrication of a mould consisting of two parts according to any one of claims 1-6, characterized in that the process comprises the following steps:
   a) placing a contour model on a solid base;
   b) optional application of a layer of uncured thermosetting plastic to the contour model;
   c) application of a layer of uncured thermosetting plastic to the surface of the contour model (or metal layer);
   d) application of a layer of irregularly shaped, adjacent metal particles such that each metal particle is partially embedded in the still soft plastic layer;
   e) curing of the plastic;
   f) removal of air from the cavities in the layer of metal particles projecting from the plastic layer, these cavities being filled with cement paste;
   g) pouring cement paste into a shell mould placed around the contour model until it is full;
   h) sprinkling the cement paste with metal particles such that, through sagging of the metal particles in the cement paste, a packing is formed of adjacent metal particles;
   i) curing of the cement paste;
   i) using cement paste to cast a level back face and allowing this to cure;
   j) turning the mould part 180 and removing the contour model;
   k) applying the material that realizes the mould cavity of the object to be formed;
   l) repeating steps b through i.

8. Process according to claims 7, characterized in that the metal layer is applied by flame spraying.

9. Process according to any one of claims 7-8, characterized in that application of a layer of irregularly shaped, adjacent metal particles, which are partially embedded in the still soft plastic, is effected by filling a ring placed around the contour model with metal particles and in that the loose metal particles are removed after curing of the plastic.

10. Process according to any one of claims 8-9, characterized in that the removal of air from the cavities in the metal particles layer projecting from the plastic layer is effected by spraying cement paste against the rough surface formed by the metal particles projecting from the plastic layer.

## Patentansprüche

1. Form für die Herstellung von geformten Gegenständen, welche Form einen Körper aufweist, welcher im wesentlichen aus einer Zement-enthaltenden Zusammensetzung hergestellt ist, wobei die Formfläche der Form eine Beschichtung hat, welche mindestens eine an den Formkörper angrenzende Schicht aus thermisch erhärtendem Kunststoff aufweist, welche Form dadurch gekennzeichnet ist, daß an der Grenzfläche ein Bindemittel vorliegt, welches aus einer einzelnen Schicht aus eng beieinanderliegenden Metallteilchen besteht, welche Metallteilchen teilweise in die Schicht aus thermisch erhärtendem Kunststoff eingebettet und mit dieser zumindest durch chemische Bindungen verbunden sind, wobei jene Oberflächen der Metallteilchen, welche nicht in Kontakt mit dem Harz stehen, völlig von Zement umgeben sind, um mindestens eine mechanische Verankerung im Formkörper zu erhalten.

2. Form nach Anspruch 1, dadurch gekennzeichnet, daß der thermisch erhärtende Kunststoff ein Epoxyharz oder ein Polyesterharz ist.

3. Form nach einem der Ansprüche 1 und 2, dadurch gekennzeichnet, daß die Metallteilchen eine unregelmäßige Oberfläche und eine gedrungene Form haben, so daß im wesentlichen alle von ihnen ein Verhältnis zwischen der größten und kleinsten Abmessung zwischen 1 und 3 haben.

4. Form nach einem der Ansprüche 1-3, dadurch gekennzeichnet, daß die Kunststoffschicht mit einer Metallschicht versehen ist, welche eine Dicke von mehr als 0,25 mm, vorzugsweise zwischen 0,5 und 3 mm, hat.

5. Form nach einem der Ansprüche 1-4, dadurch gekennzeichnet, daß die Kunststoffschicht Aluminiumpulver enthält.

6. Form nach einem der Ansprüche 1-5, dadurch gekennzeichnet, daß die Metallteilchen-Packung eine Zusammensetzung ist, welche aus gedrungenen Metallteilchen, im wesentlichen mit einem Verhältnis zwischen der größten und kleinsten Abmessung zwischen 1 und 2, und aus faserförmigen Metallteilchen, im wesentlichen mit einem Verhältnis zwischen kleinster und größter Abmessung zwischen 2 und 10, besteht.

7. Verfahren zur Herstellung einer aus zwei Teilen bestehenden Form nach einem der Ansprüche 1-6, dadurch gekennzeichnet, daß das Verfahren die folgenden Schritte aufweist:

   a) Plazieren eines Konturmodells auf einer festen Unterlage;

   b) vorzugsweise Aufbringen einer Schicht aus Metall auf das Konturmodell;

   c) Aufbringen einer Schicht aus ungehärtetem thermisch erhärtendem Kunststoff auf die Oberfläche des Konturmodells (oder der Metallschicht);

   d) Aufbringen einer Schicht aus unregelmäßig geformten, beieinander liegenden Metallteilchen, so daß jedes Metallteilchen teilweise in die noch weiche Kunststoffschicht eingebettet wird;

   e) Erhärten des Kunststoffes;

   f) Entfernen von Luft aus den Hohlräumen in der Schicht der Metallteilchen, die aus der Kunststoffschicht vorstehen, welche Hohlräume mit Zementpaste gefüllt werden;

   g) Gießen von Zementpaste in eine um das Konturmodell plazierte Becherform, bis diese voll ist;

   h) Bestreuen der Zementpaste mit Metallteilchen so, daß durch das Einsinken der Metallteilchen in die Zementpaste eine Packung aus beieinanderliegenden Metallteilchen gebildet wird;

   i) Härten der Zementpaste;

   i) Verwendung von Zementpaste, um eine ebene Rückseite zu gießen und Härtenlassen dieser Paste;

   j) Wenden des Formteiles um 180° und Entfernen des Konturmodells;

   k) Aufbringen des Materials, welches die Formausnehmung des zu formenden Gegenstandes bildet;

   l) Wiederholen der Schritte b bis i.

8. Verfahren nach Anspruch 7, dadurch gekennzeichnet, daß die Metallschicht durch Flammspritzen aufgebracht wird.

9. Verfahren nach einem der Ansprüche 7-8, dadurch gekennzeichnet, daß das Aufbringen einer Schicht aus unregelmäßig geformten, beieinanderliegenden Metallteilchen, welche teilweise in den noch weichen Kunststoff eingebettet sind, ausgeführt wird, indem ein um das Konturmodell plazierter Ring mit Metallteilchen gefüllt wird, und daß die losen Metallteilchen nach dem Härten des Kunststoffs entfernt werden.

10. Verfahren nach einem der Ansprüche 8-9, dadurch gekennzeichnet, daß das Entfernen von Luft aus den Hohlräumen in der Schicht der aus der Kunststoffschicht vorstehenden Metallteilchen herbeigeführt wird, indem Zementpaste gegen die rauhe Oberfläche, welche durch die aus der Kunststoffschicht vorstehenden Metallteilchen gebildet wird, gespritzt wird.

## Revendications

1. Moule destiné à la préparation d'objets à mettre en forme, lequel moule possède un corps qui est fabriqué essentiellement à partir d'un mélange comportant du ciment, dans lequel la face de moulage du moule a un revêtement qui comporte au moins une couche de matière plastique thermodurcissable contiguë au corps de moule et caractérisé en ce que sur l'interface il y a un agent de liaison qui consiste en une couche unique de particules de métal étroitement rapprochées, lesquelles particules de métal sont partiellement enrobées dans la couche de matière plastique thermodurcissable et lui sont liaisonnées au moins par des liaisons chimiques, les surfaces des particules de métal qui ne sont pas en contact avec la résine étant entièrement entourées par du ciment, ce qui assure au moins un ancrage mécanique dans le corps de moule.

2. Moule conforme à la revendication 1, caractérisé en ce que la matière plastique thermodurcissable est une résine époxyde ou une résine de polyester.

3. Moule conforme à l'une ou à l'autre des revendications 1 et 2, caractérisé en ce que les particules de métal ont une surface irrégulière et présentent une configuration compacte, de manière que pratiquement la totalité de ces particules aient un rapport entre leur plus grande dimension et leur plus petite dimension compris entre 1 et 3.

4. Moule conforme à l'une quelconque des revendications 1 - 3, caractérisé en ce que la couche de matière plastique est pourvue d'une couche de métal ayant une épaisseur supérieure à 0,25 mm, comprise de préférence entre 0,5 et 3 mm.

5. Moule conforme à l'une quelconque des revendications 1 - 4, caractérisé en ce que la couche de matière plastique contient de la poudre d'aluminium.

6. Moule conforme à l'une quelconque des revendications 1 - 5 , caractérisé en ce que l'agglomérat de particules de métal est un mélange constitué par des particules compactes de métal, ayant sensiblement un rapport entre leur plus grande dimension et leur plus petite dimension compris entre 1 et 2 , et par des particules de métal en forme de fibres, ayant sensiblement un rapport entre leur plus petite dimension et leur plus grande dimension compris entre 2 et 10.

7. Procédé de fabrication d'un moule constitué par deux pièces et conforme à l'une quelconque des revendications 1 - 6 , caractérisé en ce que ce procédé comporte les opérations suivantes:
   a) mise en place d'une maquette profilée sur une base pleine;
   b) application facultative d'une couche de métal sur la maquette profilée;
   c) application d'une couche de matière plastique thermodurcissable non encore traitée sur la surface de la maquette profilée (ou de la couche de métal);
   d) application d'une couche de particules de métal de formes irrégulières, rapprochées de manière que chaque particule de métal soit partiellement enrobée dans la couche de matière plastique encore molle;
   e) traitement de la matière plastique;
   f) évacuation de l'air provenant des cavités existant dans la couche de particules de métal faisant saillies à partir de la couche de matière plastique, ces cavités étant remplies de pâte de ciment;
   g) coulée de pâte de ciment dans un moule formant coquille mis en place autour de la maquette profilée jusqu'à ce qu'il soit plein;
   h) saupoudrage de la pâte de ciment à l'aide de particules de métal de manière que, du fait de l'enfoncement des particules de métal dans la pâte de ciment, un agglomérat de particules de métal rapprochées se forme;
   i) traitement de conservation de la pâte de ciment;
   j) utilisation de pâte de ciment pour couler une face arrière nivelée et traitement de conservation de cette pâte;
   k) retournement de la pièce de moule de 180° et enlèvement de la maquette profilée;
   l) application du matériau qui constitue la cavité de moule de l'objet devant être mis en forme;
   m) répétition des opérations allant de b jusqu'à j .

8. Procédé conforme à la revendication 7, caractérisé en ce que la couche de métal est appliquée par vaporisation à la flamme.

9. procédé conforme à l'une quelconque des revendications 7 - 8 , caractérisé en ce que l'application d'une couche de particules de métal de formes irrégulières, rapprochées, qui sont partiellement enrobées dans la matière plastique encore molle, est effectuée par remplissage d'un anneau mis en place autour de la maquette profilée à l'aide de particules de métal et en ce que les particules de métal non assujetties sont enlevées après traitement de la matière plastique.

10. Procédé conforme à l'une quelconque des revendications 8 - 9 , caractérisé en ce que l'évacuation de l'air provenant des cavités existant dans la couche de particules de métal faisant saillies à partir de la couche de matière plastique est effectuée par pulvérisation de pâte de ciment à l'encontre de la surface rugueuse constituée par les particules de métal faisant saillies à partir de la couche de matière plastique.

FIG. 1

FIG. 2